# EUROPEAN PATENT SPECIFICATION

(11) **EP 2 231 515 B1**
(45) Date of publication and mention of the grant of the patent: **16.05.2012**
(21) Application number: 08863423.3
(22) Date of filing: 22.12.2008
(51) Int. Cl.: C01B 31/02, C08G 8/04, C08G 8/08

(54) **PROCESS FOR PRODUCING CARBON**
VERFAHREN ZUR HERSTELLUNG VON KOHLENSTOFF
PROCÉDÉ DE PRODUCTION DE CARBONE

(30) Priority: 25.12.2007 JP 2007331564; 25.12.2007 JP 2007331566; 26.12.2007 JP 2007333999
(43) Date of publication of application: 29.09.2010
(73) Proprietor: Sumitomo Chemical Company, Limited, Tokyo 104-8260 (JP)
(72) Inventor: KURAKANE, Kosuke, Ibaraki-shi, Osaka, (JP); MURAKAMI, Chikara, Funabashi-shi, Chiba, (JP)
(74) Representative: Vossius & Partner
(86) International application number: PCT/JP2008/073909
(87) International publication number: WO 2009/082026

(56) References cited:
- JP-A- 2006 324 183
- JP-A- 2007 042 571

## Description

### Field of the Invention

The present invention relates to a process for producing a carbon.

### Background of the Invention

Carbons are used as materials for electrodes in electric double-layer capacitors, lithium ion capacitors, lithium ion secondary cells, sodium ion secondary cells and the like.

For example, JP 2007-8790 A discloses that carbons having a lot of meso pores of which pore diameter is 2 to 50 nm are useful for electrode materials in electric double-layer capacitors and a process for producing the carbon comprising carbonizing a resin composit obtained by a modification of a thermosetting resin with a silicon compound and a removal of silica derived from the silicon compound.

### Disclosure of the Invention

The present invention provides the followings:
[1] A process for producing a carbon comprising heating a phenol resin at 600 to 1,000°C under an oxidizing gas atmosphere wherein the phenol resin is obtained by reacting a compound represented by the formula (1) : 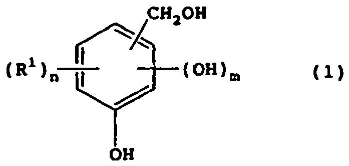 wherein R¹ represents a C1-C12 alkyl group which may be substituted with at least one substituent selected from the group consisting of a hydroxyl group, a C1-C6 alkoxy group, a C6-C20 aryl group, a C6-C20 aryloxy group, a C7-C20 aralkyloxy group, a mercapto group (-SH), a sulfo group (-SO₃H), a halogen atom, a nitro group, a cyano group, a carboxyl group, an amino group, a carbamoyl group, a C2-C7 alkoxycarbonyl group and a C2-C7 acyloxy group, m represents an integer of 0 to 4, n represents an integer of 0 to 4, and m+n is an integer of 0 to 4, and when n is 2 or more, R¹s may be the same or different from each other, with an aldehyde compound;
[2] A process for producing a carbon comprising heating a phenol resin at 600 to 1,000°C under an oxidizing gas atmosphere to obtain a calcined product and heating the calcined product at 800 to 3,000°C under an inert gas atmosphere wherein the phenol resin is obtained by reacting a compound represented by the formula (1): 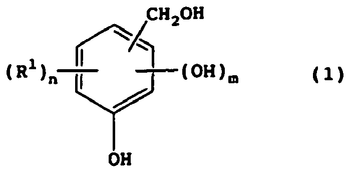 wherein R¹ represents a C1-C12 alkyl group which may be substituted with at least one substituent selected from the group consisting of a hydroxyl group, a C1-C6 alkoxy group, a C6-C20 aryl group, a C6-C20 aryloxy group, a C7-C20 aralkyloxy group, a mercapto group (-SH), a sulfo group (-SO₃H), a halogen atom, a nitro group, a cyano group, a carboxyl group, an amino group, a carbamoyl group, a C2-C7 alkoxycarbonyl group and a C2-C7 acyloxy group, m represents an integer of 0 to 4, n represents an integer of 0 to 4, m+n is an integer of 0 to 4, and when n is 2 or more, R¹s may be the same or different from each other, with an aldehyde compound;
[3] A process for producing a carbon comprising heating a phenol resin at 600 to 3,000°C under an inert gas atmosphere wherein the phenol resin is obtained by reacting a compound represented by the formula (1): 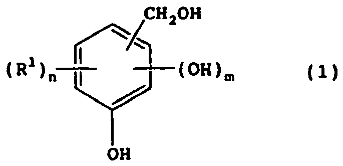 wherein R¹ represents a C1-C12 alkyl group which may be substituted with at least one substituent selected from the group consisting of a hydroxyl group, a C1-C6 alkoxy group, a C6-C20 aryl group, a C6-C20 aryloxy group, a C7-C20 aralkyloxy group, a mercapto group (-SH), a sulfo group (-SO₃H), a halogen atom, a nitro group, a cyano group, a carboxyl group, an amino group, a carbamoyl group, a C2-C7 alkoxycarbonyl group and a C2-C7 acyloxy group, m represents an integer of 0 to 4, n represents an integer of 0 to 4, m+n is an integer of 0 to 4, and when n is 2 or more, R¹s may be the same or different from each other, with an aldehyde compound;
[4] The process according to any on of [1] to [3], wherein m and n represent 0;
[5] The process according to any one of [1] to [4], wherein the aldehyde compound is formaldehyde; and
[6] A process for producing carbon fine particles comprising grinding a carbon obtained according to any one of [1] to [5].

### Modes for Carrying Out the Invention

First, a phenol resin obtained by reacting a compound represented by the formula (1) : 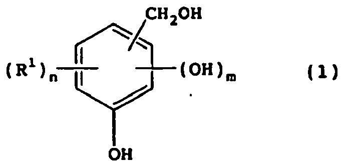 (hereinafter, simply referred to as the compound (1)) with an aldehyde compound will be illustrated.

In the formula (1), R¹ represents a C1-C12 alkyl group. Examples of the C1-C12 alkyl group include a C1-C12 linear alkyl group such as a methyl group, an ethyl group, an n-propyl group, an n-butyl group, an n-pentyl group, an n-hexyl group and an n-octyl group; a C3-C12 branched chain alkyl group such as an isopropyl group, an isobutyl group, an sec-butyl group, a tert-butyl group, a 2-ethylhexyl group; and a C3-C12 cyclic alkyl group such as a cyclopentyl group and a cyclohexyl group.

The above-mentioned C1-C12 alkyl group may be substituted with at least one substituent selected from the group consisting of a hydroxyl group, a C1-C6 alkoxy group, a C6-C20 aryl group, a C6-C20 aryloxy group, a C7-C20 aralkyloxy group, a mercapto group (-SH), a sulfo group (-SO₃H), a halogen atom, a nitro group, a cyano group, a carboxyl group, an amino group, a carbamoyl group, a C2-C7 alkoxycarbonyl group and a C2-C7 acyloxy group.

Examples of the C1-C6 alkoxy group include a methoxy group, an ethoxy group, an n-propoxy group, an isopropoxy group, an n-butoxy group, an isobutoxy group, a tert-butoxy group, an n-pentyloxy group and an n-hexyloxy group.

Examples of the C6-C20 aryl group include a phenyl group, a 2-methylphenyl group, a 3-methylphenyl group, a 4-methylphenyl group, a 1-naphthyl group and a 2-naphthyl group.

Examples of the C6-C20 aryloxy group include a phenoxy group, a 2-methylphenoxy group, a 3-methylphenoxy group, a 4-methylphenoxy group, a 1-naphthoxy group and a 2-naphthoxy group.

Examples of the C7-C20 aralkyloxy group include a benzyloxy group.

Examples of the halogen atom include a fluorine atom, a chlorine atom, a bromine atom and an iodine atom.

Examples of the C2-C7 alkoxycarbonyl group include a methoxycarbonyl group, an ethoxycarbonyl group, an n-propoxycarbonyl group, an isopropoxycarbonyl group, an n-butoxycarbonyl group, an isobutoxycarbonyl group, an sec-butoxycarbonyl group, a tert-butoxycarbonyl group, an n-pentyloxycarbonyl group and an n-hexyloxycarbonyl group.

Examples of the C2-C7 acyloxy group include an acetyloxy group, a propionyloxy group and a butanoyloxy group.

Examples of the C1-C12 alkyl group substituted with at least one substituent include a 2-hydroxyethyl group, a 2-hydroxypropyl group, a 3-hydroxypropyl group, a 2-hydroxybutyl group, a 3-hydroxybutyl group, a 4-hydroxybutyl group, a 2,3-dihydroxypropyl group, a 3,4-dihydroxybutyl group, a methoxymethyl group, an ethoxymethyl group, a 2-methoxyethyl group, a 2-ethoxyethyl group, a 3-methoxypropyl group, a 3-ethoxypropyl group, a 2-hydroxy-3-methoxypropyl group, a benzyl group, a 1-phenylethyl group, a 2-phenylethyl group, a 1-phenylpropyl group, a 2-phenylpropyl group, a 3-phenylpropyl group, a 1-phenylbutyl group, a 2-phenylbutyl group, a 3-phenylbutyl group, a 4-phenylbutyl group, a benzyloxymethyl group, a 1-phenoxyethyl group, a 2-phenoxyethyl group, a 1-phenoxypropyl group, a 2-phenoxypropyl group, a 3-phenoxypropyl group, a 1-phenoxybutyl group, a 2-phenoxybutyl group, a 3-phenoxybutyl group, a 4-phenoxybutyl group, a mercaptomethyl group, a 1-mercaptoethyl group, a 2-mercaptoethyl group, a 1-mercaptopropyl group, a 2-mercaptopropyl group, a 3-mercaptopropyl group, a 1-mercaptobutyl group, a 2-mercaptobutyl group, a 3-mercaptobutyl group, a 4-mercaptobutyl group, a sulfomethyl group, a 1-sulfoethyl group, a 2-sulfoethyl group, a 1-sulfopropyl group, a 2-sulfopropyl group, a 3-sulfopropyl group, a 1-sulfobutyl group, a 2-sulfobutyl group, a 3-sulfobutyl group, a 4-sulfobutyl group, a chloromethyl group, a bromomethyl group, a 2-chloroethyl group, a 2-bromoethyl group, a 3-chloropropyl group, a 3-bromopropyl group, a 4-chlorobutyl group, a 4-bromobutyl group, a nitromethyl group, a 1-nitroethyl group, a 2-nitroethyl group, a 1-nitropropyl group, a 2-nitropropyl group, a 3-nitropropyl group, a 1-nitrobutyl group, a 2-nitrobutyl group, a 3-nitrobutyl group, a 4-nitrobutyl group, an aminomethyl group, a 1-aminoethyl group, a 2-aminoethyl group, a 1-aminopropyl group, a 2-aminopropyl group, a 3-aminopropyl group, a 1-aminobutyl group, a 2-aminobutyl group, a 3-aminobutyl group, a 4-aminobutyl group, a carboxymethyl group, a 2-carboxyethyl group, a 3-carboxypropyl group, a 4-carboxybutyl group, a 1,2-dicarboxyethyl group, a carbamoylmethyl group, a 2-carbamoylethyl group, a 3-carbamoylpropyl group, a 4-carbamoylbutyl group, a methoxycarbonylmethyl group, an ethoxycarbonylmethyl group, a 2-(methoxycarbonyl)ethyl group, a 2-(ethoxycarbonyl)ethyl group, a 3-(methoxycarbonyl)propyl group, a 3-(ethoxycarbonyl)propyl group, a 4-(methoxycarbonyl)butyl group, a 4-(ethoxycarbonyl)butyl group, an acetyloxymethyl group, a propionyloxymethyl group, a 2-acetyloxyethyl group, a 2-propionyloxyethyl group, a 3-acetyloxypropyl group, a 3-propionyloxypropyl group, a 4-acetyloxybutyl group and a 4-propionyloxybutyl group.

R¹ preferably represents a C1-C8 unsubstituted linear alkyl group and more preferably represents a methyl group, an ethyl group and an n-hexyl group.

In the formula (1), m represents an integer of 0 to 4, n represents an integer of 0 to 4, and m+n is an integer of 0 to 4. In the formula (1), n preferably represents 0 or 1 and more preferably represents 0. In the formula (1), m preferably represents 0 or 1 and more preferably represents 0. When n is 2 or more, R¹s may be the same or different from each other.

Two or more kinds of the compound (1) may be mixed to use.

A compound (1) wherein -CH₂OH group is bonded to a carbon atom at 3-position of a hydroxyl group is preferable.

Examples of the compound (1) include a hydroxybenzyl alcohol compound such as 2-hydroxybenzyl alcohol, 3-hydroxybenzyl alcohol, 4-hydroxybenzyl alcohol, 2-hydroxy-3-methylbenzyl alcohol, 2-hydroxy-4-methylbenzyl alcohol, 2-hydroxy-5-methylbenzyl alcohol, 3-hydroxy-2-methylbenzyl alcohol, 3-hydroxy-4-methylbenzyl alcohol, 4-hydroxy-2-methylbenzyl alcohol, 4-hydroxy-3-methylbenzyl alcohol, 2,3-dimethyl-4-hydroxybenzyl alcohol, 2,3-dimethyl-5-hydroxybenzyl alcohol, 2,4-dimethyl-6-hydroxybenzyl alcohol, 2,6-dimethyl-4-hydroxybenzyl alcohol and 3,5-dimethyl-4-hydroxybenzyl alcohol; and a dihydroxybenzyl alcohol compound such as 2,4-dihydroxybenzyl alcohol, 3,4-dihydroxybenzyl alcohol, 3,5-dihydroxybenzyl alcohol and 3,5-dihydroxy-4-methylbenzyl alcohol.

A commercially available compound (1) may be used. The compound (1) produced by reducing a compound represented by the formula (2): 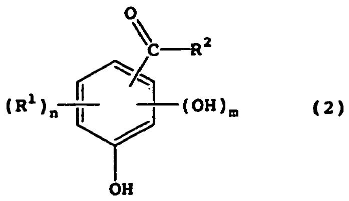 wherein R¹, m and n are the same as defined above and R² represents a hydrogen atom, a hydroxyl group or a C1-C6 alkoxy group (hereinafter, simply referred to as the compound (2)) may also be used.

Examples of the C1-C6 alkoxy group include a methoxy group, an ethoxy group, an n-propoxy group, an isopropyxy group, an n-butoxy group, an isobutoxy group, an sec-butoxy group, a tert-butoxy group and an n-hexyloxy group.

Examples of the compound (2) include a hydroxybenzaldehyde compound such as 2-hydroxybenzaldehyde, 3-hydroxybenzaldehyde, 4-hydroxybenzaldehyde, 2-hydroxy-3-methylbenzaldehyde, 2-hydroxy-4-methylbenzaldehyde, 2-hydroxy-5-methylbenzaldehyde, 3-hydroxy-2-methylbenzaldehyde, 3-hydroxy-4-methylbenzaldehyde, 4-hydroxy-2-methylbenzaldehyde, 4-hydroxy-3-methylbenzaldehyde, 2,3-dimethyl-4-hydroxybenzaldehyde, 2,3-dimethyl-5-hydroxybenzaldehyde, 2,4-dimethyl-6-hydroxybenzaldehyde, 2,6-dimethyl-4-hydroxybenzaldehyde and 3,5-dimethyl-4-hydroxybenzaldehyde; a dihydroxybenzaldehyde compound such as 2,4-dihydroxybenzaldehyde, 3,4-dihydroxybenzaldehyde, 3,5-dihydroxybenzaldehyde and 3,5-dihydroxy-4-methylbenzaldehyde; a hydroxybenzoic acid compound such as 2-hydroxybenzoic acid, 3-hydroxybenzoic acid, 4-hydroxybenzoic acid, 2-hydroxy-3-methylbenzoic acid, 2-hydroxy-4-methylbenzoic acid, 2-hydroxy-5-methylbenzoic acid, 3-hydroxy-2-methylbenzoic acid, 3-hydroxy-4-methylbenzoic acid, 4-hydroxy-2-methylbenzoic acid, 4-hydroxy-3-methylbenzoic acid, 2,3-dimethyl-4-hydroxybenzoic acid, 2,3-dimethyl-5-hydroxybenzoic acid, 2,4-dimethyl-6-hydroxybenzoic acid, 2,6-dimethyl-4-hydroxybenzoic acid and 3,5-dimethyl-4-hydroxybenzoic acid; a dihydroxybenzoic acid compound such as 2,4-dihydroxybenzoic acid, 3,4-dihydroxybenzoic acid, 3,5-dihydroxybenzoic acid and 3,5-dihydroxy-4-methylbenzoic acid; a hydroxybenzoate compound such as methyl 2-hydroxybenzoate, methyl 3-hydroxybenzoate, methyl 4-hydroxybenzoate, methyl 2-hydroxy-3-methylbenzoate, methyl 2-hydroxy-4-methylbenzoate, methyl 2-hydroxy-5-methylbenzoate, methyl 3-hydroxy-2-methylbenzoate, methyl 3-hydroxy-4-methylbenzoate, methyl 4-hydroxy-2-methylbenzoate, methyl 4-hydroxy-3-methylbenzoate, methyl 2,3-dimethyl-4-hydroxybenzoate, methyl 2,3-dimethyl-5-hydroxybenzoate, methyl 2,4-dimethyl-6-hydroxybenzoate, methyl 2,6-dimethyl-4-hydroxybenzoate and methyl 3,5-dimethyl-4-hydroxybenzoate; and a dihydroxybenzoate compound such as methyl 2,4-dihydroxybenzoate, methyl 3,4-dihydroxybenzoate, methyl 3,5-dihydroxybenzoate and methyl 3,5-dihydroxy-4-methylbenzoate.

A commercially available compound (2) is usually used.

Examples of the reducing method of the compound (2) include a method comprising reacting the compound (2) with a reducing agent and a method comprising hydrogenating the compound (2) in the presence of a catalyst

Examples of the reducing agent include lithium aluminum hydride, sodium borohydride and zinc borohydride. Examples of the catalyst include Raney nickel catalyst and a platinum catalyst.

For example, 3-hydroxybenzyl alcohol can be produced by reacting 3-hydroxybenzaldehyde, 3-hydroxybenzoic acid or an ester of 3-hydroxybenzoic acid with a reducing agent, or by hydrogenating 3-hydroxybenzaldehyde, 3-hydroxybenzoic acid or an ester of 3-hydroxybenzoic acid in the presence of a platinum catalyst or Raney nickel catalyst.

The above-mentioned reducing methods are usually conducted according to known methods of reducing an aldehyde compound, a carboxylic acid compound or an ester of a carboxylic acid to give the corresponding alcohol compound.

The phenol resin used in the present invention is obtained by reacting the compound (1) with an aldehyde compound.

Examples of the aldehyde compound include an aliphatic aldehyde compound such as formaldehyde, paraformaldehyde, acetaldehyde, butyraldehyde and an aromatic aldehyde compound such as benzaldehyde and salicylaldehyde, and the aliphatic aldehyde compound is preferable and formaldehyde is more preferable.

A commercially available aldehyde compound is usually used.

An aqueous solution of the aldehyde such as formalin may be used.

The used amount of the aldehyde compound is usually 1 to 3 moles and preferably 1.2 to 2.5 moles per 1 mole of the compound (1).

The reaction of the compound (1) and the aldehyde compound is usually conducted in the presence of a basic catalyst in a solvent.

Examples of the basic catalyst include ammonia; an alkali metal carbonate such as lithium carbonate, sodium carbonate and potassium carbonate; an alkali metal hydroxide such as lithium hydroxide, sodium hydroxide and potassium hydroxide; and an alkali earth metal carbonate such as barium carbonate. The alkali metal carbonate is preferable and sodium carbonate is more preferable.

The used amount of the basic catalyst is usually 0.001 to 4 moles, preferably 0.002 to 2 moles and more preferably 0.02 to 0.1 mole per 1 mole of the compound (1).

Examples of the solvent include water and a hydrophilic solvent, and examples of the hydrophilic solvent include a hydrophilic alcohol solvent such as methanol, ethanol and isopropanol, a hydrophilic ether solvent such as tetrahydrofuran and a hydrophilic amide solvent such as N,N-dimethylformamide and N-methyl-2-pyrrolidone. Two or more kinds of the solvent may be mixed to use. Water, a C1-C3 alcohol solvent and a mixture thereof are preferable, and water is more preferable.

Herein, "hydrophilic solvent" means a solvent capable of being miscible in any proportion with water.

The used amount of the solvent is usually 0.5 to 20 parts by weight and preferably 1 to 10 parts by weight per 1 part by weight of the compound (1).

The reaction of the compound (1) and the aldehyde compound is usually carried out by mixing the compound (1), the aldehyde compound, the basic catalyst and the solvent, and the mixing order is not limited. The compound (1), the aldehyde compound, the basic catalyst and the solvent may be mixed to conduct the reaction at 0 to 100°C and preferably at 30 to 90°C, and the aldehyde compound may be added to a mixture of the compound (1), the basic catalyst and the solvent to conduct the reaction at 0 to 100°C and preferably at 30 to 90°C. Alternatively, the compound (1) may be added to a mixture of the aldehyde compound, the basic catalyst and the solvent to conduct the reaction at 0 to 100°C and preferably at 30 to 90°C, and the basic catalyst may be added to a mixture of the compound (1), the aldehyde compound and the solvent to conduct the reaction at 0 to 100°C and preferably at 30 to 90°C. The aldehyde compound is preferably added to a mixture of the compound (1), the basic catalyst and the solvent to conduct the reaction at 0 to 100°C and preferably at 30 to 90°C.

After completion of the reaction, the reaction mixture is usually washed with a solvent for washing and then the phenol resin is usually separated from the reaction mixture by filtration, decantation or the like.

Examples of the solvent for washing include an aqueous solution or an alcohol solution of an acid such as hydrochloride, sulfuric acid and acetic acid, and acetic acid. Examples of the alcohol of the above-mentioned alcohol solution include methanol, ethanol, n-propanol, isopropanol and tert-butanol.

The washing is usually conducted at a temperature below the boiling point of the solvent for washing.

Although the phenol resin separated may be used as it is for heating described below, the phenol resin is preferably dried to use for heating described below.

The drying may be carried out by ventilation or under reduced pressure. The drying temperature is usually room temperature to 100°C.

When the above-mentioned reaction of the compound (1) and the aldehyde compound is conducted in water, the drying is preferably conducted after washing the phenol resin with a water-soluble solvent. When the above-mentioned washing is conducted using an aqueous solution of an acid, the drying is preferably conducted after washing the phenol resin with a water-soluble solvent. Examples of the water-soluble solvent include an alcohol solvent such as methanol, ethanol, n-propanol, isopropanol and tert-butanol, an aliphatic nitrile solvent such as acetonitrile, an aliphatic ketone solvent such as acetone, an aliphatic sulfoxide solvent such as dimethyl sulfoxide, and an aliphatic carboxylic acid solvent such as acetic acid. The alcohol solvent, the aliphatic sulfoxide solvent and the aliphatic carboxylic acid solvent are preferable, and tert-butanol, dimethyl sulfoxide and acetic acid are more preferable.

Alternatively, the phenol resin separated may be freeze-dried. The temperature of freeze-drying is usually -70 to 20°C and preferably -30 to 10°C. The freeze-drying is usually conducted under vacuum.

A carbon can be produced by heating the obtained phenol resin under an oxidizing gas atmosphere at 600 to 1,000°C and preferably at 700 to 900°C.

Examples of the oxidizing gas include air, H₂O, CO₂ and O₂, and CO₂ is preferable.

The heating is preferably conducted in a calcining furnace such as a rotary kiln, a roller hearth kiln, a pusher kiln, a multiple-hearth furnace, a fluidized bed furnace, a high-temperature calcining furnace. The rotary kiln is more preferably used in viewpoint that much amount of the phenol resin can easily be heated.

The heating time is usually 1 minute to 24 hours.

The heating is usually conducted by placing the obtained phenol resin in a calcining furnace, putting an oxidizing gas into the calcining furnace and then heating at 600 to 1,000°C for a given time.

A carbon can also be produced by heating the obtained phenol resin at 600 to 1,000°C under an oxidizing gas atmosphere to obtain a calcined product and heating the calcined product under an inert gas atmosphere at 800 to 3,000°C. The calcined product is preferably heated under an inert gas atmosphere at 2500 to 3000°C.

The heating time at 600 to 1,000°C is usually 1 minute to 24 hours.

Examples of an oxidizing gas include the same as described above.

The heating time at 800 to 3,000°C under an inert gas atmosphere is usually 1 minute to 24 hours.

Examples of the inert gas include nitrogen and a rare gas such as helium, neon, argon, krypton and xenon.

The heating is preferably conducted in a calcining furnace and examples of the calcining furnace include the same as described above. The rotary kiln is more preferably used in viewpoint that much amount of the phenol resin can easily be heated.

The heating time is usually 1 minute to 24 hours. The heating is usually conducted by placing the obtained phenol resin in a calcining furnace, putting an oxidizing gas into the calcining furnace, heating at 600 to 1,000°C for a given time, putting an inert gas into the calcining furnace and then heating at 800 to 3,000°C for a given time.

A carbon having higher meso pore ratio can be obtained by heating the obtained phenol resin at 600 to 1,000°C under an oxidizing gas atmosphere followed by heating at 800 to 3,000°C under an inert gas atmosphere.

Herein, "meso pore ratio" is calculated by dividing the meso pore volume by the total pore volume, and it is expressed in percentage. The total pore volume is calculated from nitrogen adsorption amount around a relative pressure of 0.95 in a nitrogen adsorption isothermal curve at liquid nitrogen temperature and the meso pore volume is calculated from a nitrogen adsorption isothermal curve using BHJ method.

Alternatively, a carbon can also be produced by heating the obtained phenol resin under an inert gas atmosphere at 600 to 3,000°C and preferably at 2,500 to 3,000°C.

The heating time at 600 to 3,000°C under an inert gas atmosphere is usually 1 minute to 24 hours.

Examples of the inert gas include the same as described above.

The heating is preferably conducted in a calcining furnace and examples of the calcining furnace include the same as described above. The rotary kiln is more preferably used in viewpoint that much amount of the phenol resin can easily be heated.

The heating is usually conducted by placing the obtained phenol resin in a calcining furnace, putting an inert gas into the calcining furnace, and then heating at 600 to 3,000°C for a given time.

The carbon thus obtained can be used for materials for electrodes in dry batteries, sensor for a piezoelectric devices, electric double-layer capacitors, lithium ion capacitors, lithium ion secondary cells, sodium ion secondary cells, carriers for supporting catalysts, carriers for chromatography, adsorbents and the like.

The carbon thus obtained is usually ground to carbon fine particles having an average particle size of 50 µm or less, preferably 30 µm or less, and more preferably 10 µm or less to used for electrodes.

Examples of the suitable grinding methods include methods of grinding using a grinding machine for fine grinding such as an impact wear grinder, a centrifugal grinder, a ball mill (e.g. a tube mill, a compound mill, a conical ball mill, a rod mill and a planetary boll mill), a vibration mill, a colloid mill, a friction disk mill and a jet mill, and the ball mill is usually used as the grinding machine. When the ball mill is used, balls and grinding vessels made of non-metals such as alumina and agate is preferable in viewpoint of avoiding incorporation of metal powders in the carbon fine particles obtained.

### Examples

The present invention will be illustrated in more detail based on Examples bellow, but the present invention is not limited to these Examples.

The total pore volume of the carbon fine particles obtained is calculated from nitrogen adsorption amount around a relative pressure of 0.95 in a nitrogen adsorption isothermal curve at liquid nitrogen temperature using AUTOSORB manufactured by YUASA IONICS. The meso pore volume of the carbon fine particles obtained is calculated from a nitrogen adsorption isothermal curve using BHJ method. The meso pore ratio is calculated by dividing the meso pore volume of the carbon fine particles obtained by the total pore volume of the carbon fine particles obtained and is expressed in percentage.

### Example 1

(1) To the reaction container, 50.0 parts by weight of 3-hydroxybenzyl alcohol, 208 parts by weight of distilled water and 1.1 parts by weight of 0.5 wt% aqueous sodium carbonate solution were added and the resultant mixture was stirred at 30°C. To the obtained mixture, 64.7 parts by weight of formalin was added and the obtained mixture was stirred at 30°C for 30 minutes.

The obtained mixture was transferred to a stainless-steel container and the mixture was heated at 80°C for 24 hours to obtain a solid reaction mixture containing a phenol resin and water. The obtained solid reaction mixture was broken coarsely and then mixed with tert-butanol. The obtained mixture was stirred at 60°C for 1 hour and filtrated to obtain a phenol resin. The obtained phenol resin was mixed with tert-butanol and the resultant mixture was stirred at 60°C for 1 hour and filtrated to obtain a phenol resin, and this operation was further repeated twice to obtain a phenol resin. The obtained phenol resin was dried at 60°C for 24 hours under reduced pressure to obtain 53.2 parts by weight of a phenol resin. (2) The phenol resin obtained in above-mentioned (1) was heated at 800°C for 1 hour in a rotary kiln under CO₂ atmosphere to obtain a carbon. The obtained carbon was ground using a planetary ball mill having a ball made of agate at 300 rpm for 5 minutes to obtain carbon fine particles.

The result is shown in Table 1.

### Example 2

Carbon fine particles obtained in the above Example 1 (2) were heated at 2,800°C for 1 hour in a rotary kiln under an argon atmosphere to obtain carbon fine particles.

The result is shown in Table 1.

**Table 1**

| Example | Total pore volume (ml/g) | Meso pore volume (ml/g) | Meso pore ratio (%) |
|---|---|---|---|
| 1 | 0.65 | 0.35 | 54 |
| 2 | 0.36 | 0.32 | 89 |

### Example 3

The phenol resin obtained in the above Example 1 (1) was heated at 1,000°C for 1 hour in a rotary kiln under an argon atmosphere to obtain a carbon. The obtained carbon was ground using a planetary ball mill having a ball made of agate at 300 rpm for 5 minutes to obtain carbon fine particles.

The total pore volume of the carbon fine particles obtained and the meso pore volume of the carbon fine particles obtained were 0.01 ml/g and the meso pore ratio was 100%.

### Industrial Applicability

According to the present invention, a carbon having a high meso pore ratio can be produced.

## Claims

1. A process for producing a carbon comprising heating a phenol resin at 600 to 1,000°C under an oxidizing gas atmosphere wherein the phenol resin is obtained by reacting a compound represented by the formula (1): 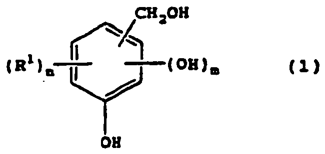 wherein R¹ represents a C1-C12 alkyl group which may be substituted with at least one substituent selected from the group consisting of a hydroxyl group, a C1-C6 alkoxy group, a C6-C20 aryl group, a C6-C20 aryloxy group, a C7-C20 aralkyloxy group, a mercapto group (-SH), a sulfo group (-SO₃H), a halogen atom, a nitro group, a cyano group, a carboxyl group, an amino group, a carbamoyl group, a C2-C7 alkoxycarbonyl group and a C2-C7 acyloxy group, m represents an integer of 0 to 4, n represents an integer of 0 to 4, and m+n is an integer of 0 to 4, and when n is 2 or more, R¹s may be the same or different from each other, with an aldehyde compound.

2. The process according to claim 1, wherein the phenol resin is heated to obtain a calcined product and the calcined product is heated at 800 to 3,000°C under an inert gas atmosphere.

3. A process for producing a carbon comprising heating a phenol resin at 600 to 3,000°C under an inert gas atmosphere wherein the phenol resin is obtained by reacting a compound represented by the formula (1): 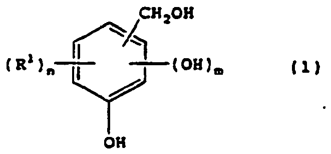 wherein R¹ represents a C1-C12 alkyl group which may be substituted with at least one substituent selected from the group consisting of a hydroxyl group, a C1-C6 alkoxy group, a C6-C20 aryl group, a C6-C20 aryloxy group, a C7-C20 aralkyloxp group, a mercapto group (-SH), a sulfo group (-SO₃H), a halogen atom, a nitro group, a cyano group, a carboxyl group, an amino group, a carbamoyl group, a C2-C7 alkoxycarbonyl group and a C2-C7 acyloxy group, m represents an integer of 0 to 4, n represents an integer of 0 to 4, m+n is an integer of 0 to 4, and when n is 2 or more, R¹s may be the same or different from each other, with an aldehyde compound.

4. The process according to any one of claims 1 to 3, wherein m and n represent 0.

5. The process according to any one of claims 1 to 4, wherein the aldehyde compound is formaldehyde.

6. A process for producing carbon fine particles comprising grinding a carbon obtained according to any one of claims 1 to 5.

## Patentansprüche

1. Ein Verfahren zur Herstellung von Kohlenstoff, umfassend das Erwärmen eines Phenolharzes bei 600 bis 1.000°C in einer oxidierenden Gasatmosphäre, wobei das Phenolharz durch das Umsetzen einer Verbindung, die durch die Formel (1) dargestellt ist: 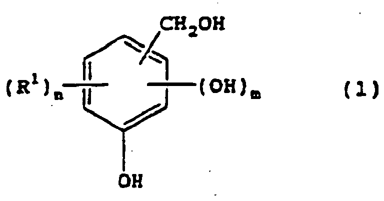 wobei R¹ einen C1-C12 Alkylrest, der mit mindestens einem Substituenten, ausgewählt aus der Gruppe bestehend aus einer Hydroxylgruppe, einem C1-C6 Alkoxyrest, einem C6-C20 Arylrest, einem C6-C20 Aryloxyrest, einem C7-C20 Aralkyloxyrest, einer Mercaptogruppe (-SH), einer Sulfogruppe (-SO₃H), einem Halogenatom, einer Nitrogruppe, einer Cyanogruppe, einer Carboxylgruppe, einer Aminogruppe, einer Carbamoylgruppe, einem C2-C7 Alkoxycarbonylrest und einem C2-C7 Acyloxyrest, substituiert sein kann, darstellt, m eine ganze Zahl von 0 bis 4 ist, n eine ganze Zahl von 0 bis 4 ist und m+n eine ganze Zahl von 0 bis 4 ist, und falls n 2 oder mehr ist, können die Reste R¹ gleich oder voneinander verschieden sein, mit einer Aldehydverbindung erhalten wird.

2. Das Verfahren gemäß Anspruch 1, wobei das Phenolharz so erwärmt wird, dass ein kalziniertes Produkt erhalten wird und das kalzinierte Produkt auf 800 bis 3.000°C in einer Inertgasatmosphäre erwärmt wird.

3. Ein Verfahren zur Herstellung von Kohlenstoff, umfassend das Erwärmen eines Phenolharzes bei 600 bis 3.000°C in einer Inertgasatmosphäre, wobei das Phenolharz durch das Umsetzen einer Verbindung, die durch die Formel (1) dargestellt ist: 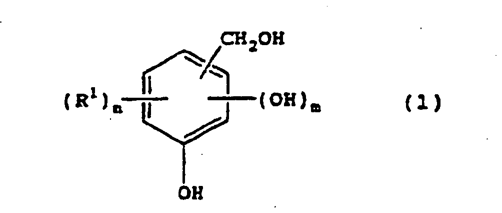 wobei R¹ einen C1-C12 Alkylrest, der mit mindestens einem Substituenten, ausgewählt aus der Gruppe bestehend aus einer Hydroxylgruppe, einem C1-C6 Alkoxyrest, einem C6-C20 Arylrest, einem C6-C20 Aryloxyrest, einem C7-C20 Aralkyloxyrest, einer Mercaptogruppe (-SH), einer Sulfogruppe (-SO₃H), einem Halogenatom, einer Nitrogruppe, einer Cyanogruppe, einer Carboxylgruppe, einer Aminogruppe, einer Carbamoylgruppe, einem C2-C7 Alkoxycarbonylrest und einem C2-C7 Acyloxyrest, substituiert sein kann, darstellt, m eine ganze Zahl von 0 bis 4 ist, n eine ganze Zahl von 0 bis 4 ist und m+n eine ganze Zahl von 0 bis 4 ist, und falls n 2 oder mehr ist, können die Reste R¹ gleich oder voneinander verschieden sein,
mit einer Aldehydverbindung erhalten wird.

4. Das Verfahren gemäß einem der Ansprüche 1 bis 3, wobei m und n 0 sind.

5. Das Verfahren gemäß einem der Ansprüche 1 bis 4, wobei die Aldehydverbindung Formaldehyd ist.

6. Ein Verfahren zur Herstellung von feinen Kohlenstoffteilchen, umfassend das Mahlen des Kohlenstoffs, der gemäß einem der Ansprüche 1 bis 5 erhalten wird.

## Revendications

1. Procédé de production d'un carbone comprenant le chauffage d'une résine de phénol à de 600 à 1 000°C sous une atmosphère de gaz oxydant dans lequel la résine de phénol est obtenue par réaction d'un composé représenté par la formule (1) : 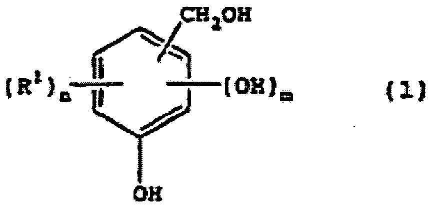 dans laquelle R¹ représente un groupe alkyle en C1-C12 qui peut être substitué avec au moins un substituant choisi dans le groupe constitué d'un groupe hydroxyle, d'un groupe alcoxy en C1-C6, d'un groupe aryle en C6-C20, d'un groupe aryloxy en C6-C20, d'un groupe aralkyloxy en C7-C20, d'un groupe mercapto (-SH), d'un groupe sulfo (-SO₃H), d'un atome d'halogène, d'un groupe nitro, d'un groupe cyano, d'un groupe carboxyle, d'un groupe amino, d'un groupe carbamoyle, d'un groupe alcoxycarbonyle en C2-C7 et d'un groupe acyloxy en C2-C7, m représente un nombre entier de 0 à 4, n représente un nombre entier de 0 à 4, et m + n est un nombre entier de 0 à 4, et lorsque n est égal à 2 ou plus, les R¹ peuvent être identiques ou différents les uns des autres,
avec un composé d'aldéhyde.

2. Procédé selon la revendication 1, dans lequel la résine de phénol est chauffée pour obtenir un produit calciné et le produit calciné est chauffé à de 800 à 3 000°C sous une atmosphère de gaz inerte.

3. Procédé de production d'un carbone comprenant le chauffage d'une résine de phénol à de 600 à 3 000°C sous une atmosphère de gaz inerte, dans lequel la résine de phénol est obtenue par réaction d'un composé représenté par la formule (1) : 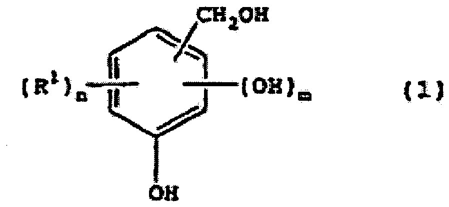 dans laquelle R¹ représente un groupe alkyle en C1-C12 qui peut être substitué avec au moins un substituant choisi dans le groupe constitué d'un groupe hydroxyle, d'un groupe alcoxy en C1-C6, d'un groupe aryle en C6-C20, d'un groupe aryloxy en C6-C20, d'un groupe aralkyloxy en C7-C20, d'un groupe mercapto (-SH), d'un groupe sulfo (-SO₃H), d'un atome d'halogène, d'un groupe nitro, d'un groupe cyano, d'un groupe carboxyle, d'un groupe amino, d'un groupe carbamoyle, d'un groupe alcoxycarbonyle en C2-C7 et d'un groupe acyloxy en C2-C7, m représente un nombre entier de 0 à 4, n représente un nombre entier de 0 à 4, et m + n est un nombre entier de 0 à 4, et lorsque n est égal à 2 ou plus, les R¹ peuvent être identiques ou différents les uns des autres,
avec un composé d'aldéhyde.

4. Procédé selon l'une quelconque des revendications 1 à 3, dans lequel m et n représentent 0.

5. Procédé selon l'une quelconque des revendications 1 à 4, dans lequel le composé d'aldéhyde est le formaldéhyde.

6. Procédé de production de fines particules de carbone comprenant le broyage d'un carbone obtenu selon l'une quelconque des revendications 1 à 5.
